# EUROPEAN PATENT APPLICATION

(11) **EP 1 850 287 A1**
(43) Date of publication of application: **31.10.2007**
(21) Application number: 07110528.2
(22) Date of filing: 31.10.2002
(51) Int. Cl.: G06Q 30/00, H04M 1/247

(54) **A server, a method and a computer program product for providing a computerized icon ordering service**

(62) Divisional of application: 02808073.7
(71) Applicant: Nokia Corporation, 02150 Espoo (FI)
(72) Inventor: Dam Nielsen, Peter, 2800 KGS Lyngby (DK); Kraft, Christian, 1814 Frederiksberg C (DK); Juul-Pedersen Gregers, 1354 Copenhagen K (DK)
(74) Representative: Milanov, Nina Vendela Maria

(57) **Abstract**

A communication apparatus has a controller (800); an interface (806; 850) adapted to receive an electronic message (852); a display (836); and a memory (802; 804). The memory is adapted to store image data representing at least one predefined icon to be presented on the display so as to indicate receipt of the electronic message. The memory (802, 804) is adapted to store an association (844, 846) between the or each predefined icon (846) and a sender (844) of electronic messages. The controller (800) is adapted to determine a sender (857) of the received electronic message (852), to match the sender thus determined with the or each predefined icon by way of the association, and to present a matching icon, if any, on the display to indicate receipt of said received electronic message as well as the sender thereof.

## Description

### Field of the Invention

The present invention relates to communication of electronic messages, and more particularly to a communication apparatus having a controller, an interface adapted to receive an electronic message, a display and a memory, said memory being adapted to store image data representing at least one predefined icon to be presented on the display so as to indicate receipt of the electronic message.

### Background of the Invention

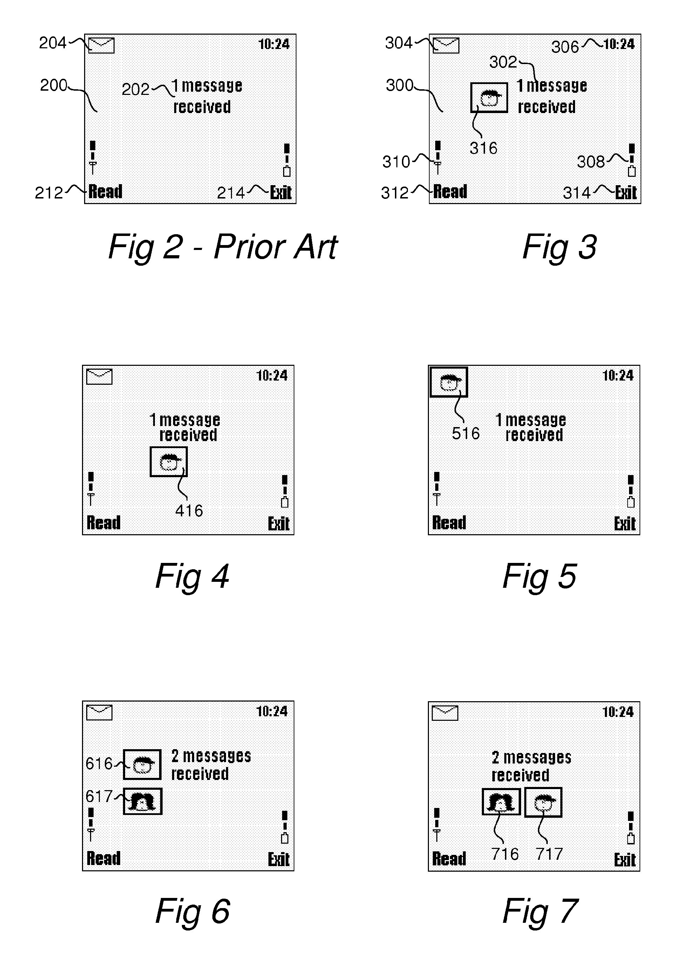

A mobile terminal in the form of a mobile (cellular) telephone for a telecommunications system like GSM, UMTS, D-AMPS or CDMA2000 is a familiar example of a communication apparatus according to the above. SMS messages are a popular type of electronic message that may be received by such a mobile terminal. In a contemporary mobile terminal for e.g. GSM, receipt of an SMS message is typically indicated as shown in FIG 2: an informative text 202 like "n message received", where n=1 in FIG 2, is presented on a display 200 of the mobile terminal. The informative text 202 typically disappears and is replaced by other information if, for instance, the user chooses to read the particular message by selecting a Read menu option 212, or chooses not to read the particular message by selecting an Exit menu option 214, or when an incoming call is announced, etc. Thus, in addition, a contemporary mobile terminal may use an envelope icon 204 which remains visible on the display 200 as long as there are unread messages in the mobile terminal.

A drawback with the known way of indicating receipt of an SMS message is that the user has no way of telling from whom the message is without having to actually enter the SMS inbox and check the message itself. In many cases, for instance in meetings, this can be quite disturbing for the user, especially if the mobile terminal already has a lot of messages stored, wherein retrieval of the recently received message will take a longer time. If the user is waiting for an important SMS message, this can be quite annoying. Thus, a problem with the prior art is that received SMS messages are indicated anonymously as well as jointly in mobile terminals, in the form of a mere indication 202 of the number of received messages, sometimes combined with a single, static and anonymous envelope icon 204.

US-6,020,828 relates to a selective call receiver, such as a pager, capable of receiving a selective call signal which, in addition to the selective calling number, comprises a message field of numeric or alphanumeric characters. If the selective calling number is identical to a predefined ID of the selective call receiver, a controller in the selective call receiver will generate an acoustic, tactile or visual alert through a speaker, vibrator or light emitting diode, respectively. A predetermined portion of the message field, indicated by special control characters, may specify an icon code which represents any of a limited number of prestored icons in the selective call receiver. The controller is adapted to check for such an icon code in a received selective call signal by examining whether aforesaid special control characters appear at the predetermined portion of the message field, namely at the very beginning thereof. If the special control characters are present, the following character in the message field is interpreted as an icon code. This icon code, if any, is matched with the prestored icons, and in case of a match, the matching icon is presented on the display of the selective call receiver, together with the remainder of the message field.

While the solution according to US-6,020,828 is capable of providing a certain degree of discrimination between individual selective call signals, it nevertheless has a couple of drawbacks.

First of all, it does not give a true and reliable indication of the actual sender of the selective call signal. An active action is required by the sender to include the control characters and the icon code in the message field. If no icon code is included, no icon indication is possible in the selective call receiver. Moreover, the selective call receiver only allows for a limited number of different icons, as selected through a single-character icon code, thereby severely restricting the ability to discriminate between different selective call signals.

Secondly, because of the presence of control characters and icon code within the message field, all selective call receivers must be configured to handle such control characters and icon code in the manner described above. However, if a particular receiver lacks such configuration, the control characters and icon code will be shown as incomprehensible information on the display.

Thirdly, the selective call receiver operates in real-time, and only one message and icon can be indicated on the display. Therefore, whenever a new selective call signal is received, the message and icon for the previous signal will be lost on the display.

For the above reasons, although the teachings of US-6,020,828 may be beneficial for selective call receivers and specific selective call signals of the described type, they fail to provide a generally applicable improvement of the shortcomings of contemporary mobile terminals as regards their way of indicating receipt of an electronic message such as SMS.

### Summary of the Invention

In view of the above, an objective of the invention is to solve or at least reduce the problems discussed above. In more particular, a purpose of the invention is to provide an improved manner of indicating receipt of electronic messages in a communication apparatus.

Generally, the above objectives are achieved by a communication apparatus and a method of indicating receipt of an electronic message, and a server, a method and a computer program product for providing a computerized icon ordering service according to the attached independent patent claims.

A first aspect of the invention is a communication apparatus which comprises a controller; an interface adapted to receive an electronic message; a display; and a memory, said memory being adapted to store image data representing at least one predefined icon to be presented on said display so as to indicate receipt of said electronic message. Said memory is adapted to store an association between the or each predefined icon and a sender of electronic messages. Said controller is adapted to determine a sender of said received electronic message, to match the sender thus determined with the or each predefined icon by way of said association, and to present a matching icon, if any, on said display to indicate receipt of said received electronic message as well as the sender thereof.

One advantage with the first aspect of the invention is that an icon that indicates the sender of a recently received message will be automatically presented to the user, and consequently the user can easily see who has sent the message without doing anything but looking at the display and then deciding whether to read the message now or later. Thus, unlike in the prior art, a recently received message will not just be indicated by an anonymous envelope icon. On the contrary a personalized icon, which the user has previously associated with a particular sender, will be displayed and indicate to the user who the sender is. The user does not have to enter a message inbox and/or actually open or read the message to find out who the sender is.

Despite the above, the senders' integrity is not unduly jeopardized, since the icon is stored locally in the receiving communication apparatus, and only the user knows the relationship between icon and sender. The name and identity (such as telephone number) of the sender are not shown at this stage.

Another advantage with the first aspect of the invention is that it allows for further personalization of the communication apparatus, since it allows users to have their own icons and to assign different icons to different entries.

In one embodiment, the electronic message is of a type having a control data portion and a message data portion, the control data portion including a message sender identity, wherein said controller is adapted to determine the sender of said received electronic message from the message sender identity. The electronic message may be an SMS or MMS message, and the message sender identity may be a telephone number for a mobile telecommunications system such as GSM, UMTS, D-AMPS or CDMA2000. Alternatively, the electronic message may be an email message.

In one embodiment, the controller is adapted to simultaneously present a plurality of matching icons on said display to indicate a corresponding plurality of received messages. Alternatively, the controller may be adapted to display, for each presented matching icon, a numeric indicator to indicate the current number of unread messages received from a respective sender associated with each presented matching icon.

In one embodiment, the controller is adapted to enhance the presentation of the or each presented icon with a visual effect such as animation, scrolling, morphing, flashing or changing colors.

In one embodiment, the communication apparatus further comprises at least one of a phonebook, address book or contact book, wherein the association between the or each predefined icon and a sender of electronic messages is stored in an entry in said phonebook, address book or contact book. The association may comprise a link to an image file, which is stored outside of said phonebook entry, address book entry or contact book entry but inside said memory, and which contains image data that defines the or each predefined icon. Alternatively, the association may comprise image data that defines the or each predefined icon and is stored in said phonebook entry, address book entry or contact book entry. The association may further comprise a message sender identity as mentioned above.

In one embodiment, the communication apparatus further comprises means for adding a new icon to said memory, and means for generating in said memory a new association between said new icon and a sender of electronic messages. The means for adding a new icon may comprise an image editor in said apparatus. Alternatively, the means for adding a new icon comprises a communications interface of said communication apparatus. The communications interface may be at least one of: a serial interface such as IrDA, USB or RS232; a short-range supplementary radio data interface such as Bluetooth; a WAP compatible interface; and an RF interface for a mobile telecommunications system such as GSM, UMTS, D-AMPS or CDMA2000. The communications interface may be the same as said interface adapted to receive an electronic message.

The communication apparatus may a portable telecommunication apparatus, such as a mobile terminal for GSM, UMTS, D-AMPS or CDMA2000.

A second aspect of the invention is a method of indicating receipt of an electronic message in a communication apparatus having a display and a memory, wherein at least one predefined icon is provided in said memory, a received electronic message is matched with the or each predefined icon, and a matching icon, if any, is presented on said display to indicate said received electronic message. The method involves the steps of providing, in said memory, an association between the or each predefined icon and a sender of electronic messages; determining a sender of said received electronic message; and determining the matching icon, if any, through the sender thus determined and said association in said memory.

The second aspect has generally the same advantages as the first aspect.

A third aspect of the invention is a method for remote distribution of icon data for indicating receipt of electronic messages to a communication apparatus. The method involves the steps of providing a computerized icon ordering service; accepting a user's selection of one icon among a plurality of available icons; forming an icon data set that defines said selected icon; and delivering said icon data set electronically to said communication apparatus, wherein said steps of forming and delivering said icon data set are performed in a manner such that said icon data set may be stored upon receipt in said communication apparatus and be associated with a sender of electronic messages.

In one embodiment, the computerized icon ordering service uses a wide area network such as the Internet and is provided from e.g. a web server, and the step of accepting a user's selection of one icon is performed through a user interface which is provided by said server and is accessible over said wide area network through e.g. a web client.

Alternatively, the computerized icon ordering service may be provided from a server connected to a telecommunications network, and said step of accepting a user's selection of one icon may be performed by accepting commands which are entered by the user on a telephone apparatus and are transmitted over said telecommunications network.

As still an alternative, the computerized icon ordering service may be performed by letting the user physically connect his/her communication apparatus, via a contact interface thereof, to a download or reprogramming station, so as to select the desired icon and download it through the contact interface to be stored within the communication apparatus.

In one embodiment, during said steps of forming and delivering said icon data set, a sender identity is included in or attached to said icon data set so as to allow association of said icon data set with a sender of electronic messages that is represented by said sender identity. The sender identity may be a telephone number for a mobile telecommunications system such as GSM, UMTS, D-AMPS or CDMA2000. The step of delivering said icon data set may be performed by including said icon data set in an SMS, MMS or email message. The communication apparatus may be a portable telecommunication apparatus, such as a mobile terminal for GSM, UMTS, D-AMPS or CDMA2000.

A fourth aspect of the invention is a server for providing a computerized icon ordering service, the server comprising a memory for a plurality of available icons; and a controller, said controller being adapted to perform the method according to the third aspect.

A fifth aspect of the invention is a computer program product directly loadable into a memory of a processor, where the computer program product comprises program code for performing the method according to the third aspect when executed by the processor.

Other objectives, features and advantages of the present invention will appear from the following detailed disclosure, from the attached dependent claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief Description of the Drawings

The present invention will now be described in more detail, reference being made to the enclosed drawings, in which:
FIG 1 is a schematic illustration of a telecommunication system, including mobile terminals, a remote server and a telecommunications network, as an example of an environment in which the present invention may be applied.
FIG 2 is a schematic illustration of a prior art manner of indicating receipt of new SMS messages on the display of a contemporary mobile terminal.
FIGs 3-7 are schematic illustrations of the manner in which receipt of new SMS messages is indicated on the display of a mobile terminal according to different embodiments of the invention.
FIG 8 is a schematic block diagram illustrating a mobile terminal of FIG 1 in more detail.
FIG 9 is a flow chart which illustrates how a new message is received and announced in a mobile terminal according to one embodiment.
FIG 10 is a flow chart which illustrates how a user may order download of an icon from a server to a mobile terminal.
FIGs 11 and 12 are flow charts which illustrate how an icon that has been ordered from a server according to FIG 10 may be received and installed in a mobile terminal.

### Detailed Description of the Invention

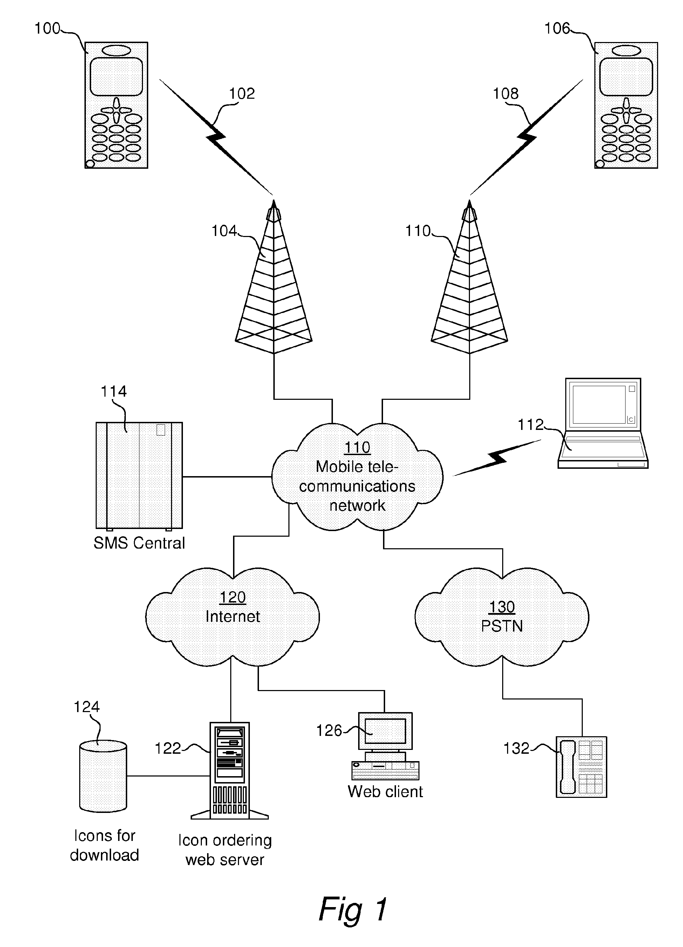

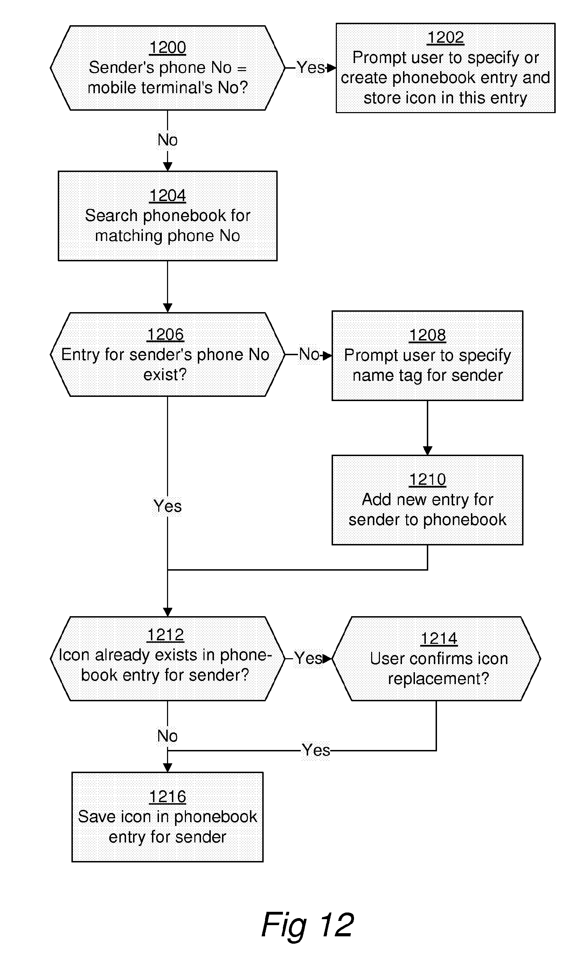

First, with reference to FIGs 1, one example of a telecommunication system in which the invention may be applied will be briefly described. Then, with reference to FIGs 2-12, some preferred embodiments of the invention will be described in more detail.

In the telecommunication system of FIG 1, various telecommunications services such as voice calls, data calls, facsimile transmissions, music transmissions, still image transmissions, video transmissions, electronic message transmissions and electronic commerce may be performed between different mobile terminals 100, 106. Among these services, electronic message transmissions are of particular importance for the present invention. In the following, SMS (short message service) messages are used an one example of such electronic message transmissions, but other types of messages, including but not limited to MMS (multimedia messaging service) or email messages, are also included in this concept.

The mobile terminals 100, 106 are connected to a mobile telecommunications network 110 through RF links 102 and 108 via respective base stations 104, 110. The mobile telecommunications network 110 may be any commercially available mobile telecommunications system, such as GSM, UMTS, D-AMPS or CDMA2000. The mobile terminals 100, 106 are illustrated as mobile (cellular) telephones but may alternatively be other kinds of portable devices, such as portable digital assistants (PDAs), communicators, palmtop computers or laptop computers, as is commonly represented by 112 in FIG 1.

A public switched telephone network (PSTN) 130 is connected to the mobile telecommunications network 110 in a familiar manner. Various telephone terminals 132 are connected to the PSTN 130.

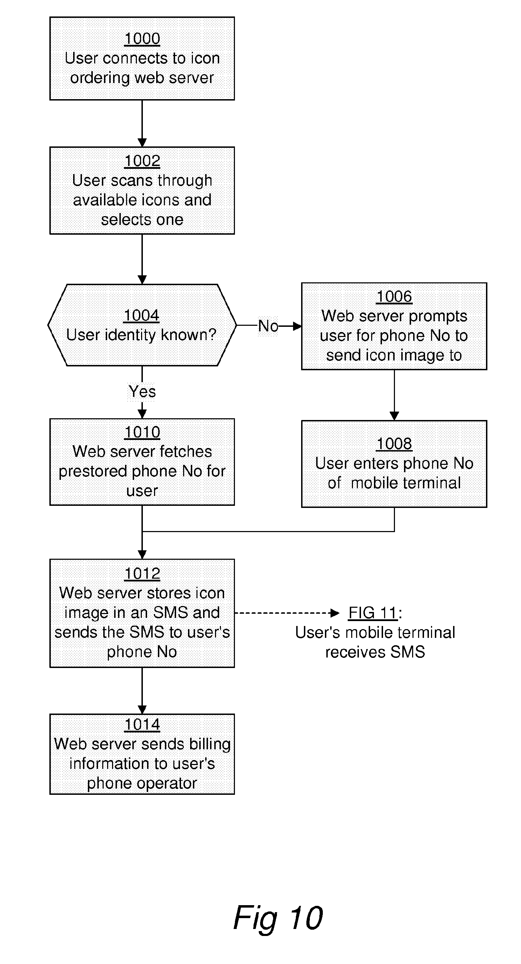

The mobile telecommunications network 110 is operatively connected to a wide area network 120, which may be Internet or a part thereof. A server computer 122 for providing ordering and downloading of icons 124 is connected to the wide area network 120, as is a client computer 126. The icon ordering and downloading service is one aspect of the invention and will be described in more detail with reference to FIGs 10-12.

The mobile telecommunications network 110 has an SMS central 114 in a well known manner. Users of the mobile terminals 100, 106 may receive SMS messages from the SMS central 114 over the radio links 102, 108 and, of course, also send outgoing SMS messages to the SMS central 114.

The arrival of a new SMS message is typically alerted to a user of the mobile terminal 100 (or 106, 112) by a visual indication on the display of the mobile terminal, sometimes in combination with a beep or click sound or another acoustic or tactile signal. Rather than merely presenting an anonymous indication like in prior art solutions (such as an envelope icon 204 and a brief informative text 202 as shown in FIG 2), the present invention provides the mobile terminal user with graphical information - in the form of a sender icon - which indicates that the SMS message has been received from a particular sender. FIG 3 shows a solution according to one embodiment. In FIG 3, an informative text 302 like "n messages received", where n=1 in FIG 3, is presented on a display 300 of the mobile terminal, much like the text 202 in the prior art terminal display of FIG 2. The user may choose to read the received message by selecting a Read menu option 312, whereby an SMS inbox will be entered, or choose not to read the message by selecting an Exit menu option 314. In addition, an envelope icon 304 may be shown on the display 300 for as long as there are unread messages in the mobile terminal. Just as in any contemporary mobile terminal, the display 300 may present a current time 306, an indicator 308 for remaining battery capacity, and another indicator 310 for received signal strength (RSSI, "Received Signal Strength Indicator").

In FIG 3, the sender icon is indicated at 316, immediately to the left of the informative text 302. It may, alternatively, be indicated in another position relative to the informative text, i.e. to the right, above or below (416; FIG 4). The sender icon 316, 416 will thus visually indicate the sender of the newly received message, and the user can easily see who has sent the message without doing anything but looking at the display 300 and then deciding whether to read it now or later.

If more than one message is received, the icons for all currently unread messages may be shown next to each other, as is indicated at 616, 617 in FIG 6 and 716, 717 in FIG 7, respectively.

Naturally, the size and color of the icons, as well as their location, can be varied in various ways on the display. A smaller icon size allows the display to accommodate more icons, whereas a larger size provides for more detailed icons and thereby greater diversity and usability. In case there are more icons to be presented than the display area can accommodate, the icons may be shown as alternating icon matrices on the display. For instance, the size of an individual icon may be in the order of 10x15 pixels, which will allow presentation of a 3x3 matrix of received message icons next to an informative text like "n messages received", even in a small-sized display. Alternatively, the icons may be provided as a train of icons floating or scrolling across the screen, so as to allow presentation of an excessive number of received message icons.

Even if there are not too many icons for presentation, the received message icons may be presented as floating, wandering, streaming, scrolling or morphing. In one embodiment, such moving received message icons are included in a screen saver. In another embodiment, the icons could be animated but remain stationary in display position, or be given a flashing appearance or an appearance with changing colors.

In one embodiment, even if more than one message is received from the same sender, only one icon is presented as a common representative of all messages received from that same sender. In another embodiment, a count number is included in one commonly presented icon to indicate the number of messages received from that particular sender. In still another embodiment, one icon is presented for each received message, even if it originates from the same sender.

Another embodiment is shown in FIG 5. Here, the contemporary envelope icon 204 in e.g. the top left corner of the prior art solution according to FIG 2 is replaced by a specific icon 516 associated with the sender of the last received message. The specific icon 516 remains on the display even after the user has entered the SMS inbox, for as long as the message remains unread or is followed by a subsequently arriving unread message.

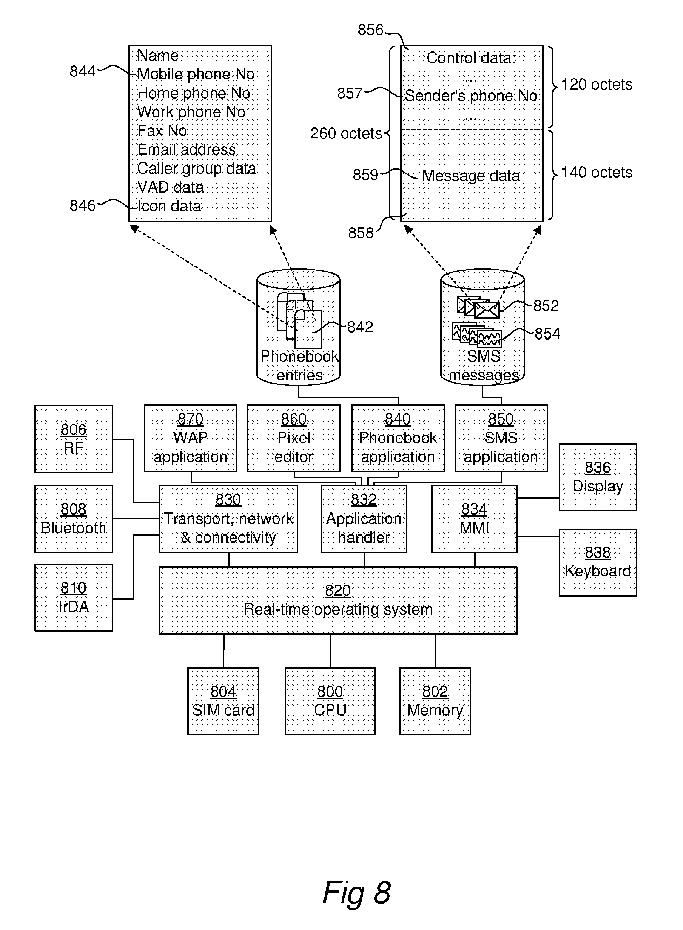

FIG 8 illustrates one embodiment of a mobile terminal according to the invention. A controller 800 is responsible for the overall operation of the mobile terminal and is preferably implemented by any commercially available CPU ("Central Processing Unit"), DSP ("Digital Signal Processor") or any other electronic programmable logic device. The controller 800 has associated electronic memory 802 such as RAM memory, ROM memory, EEPROM memory, flash memory, or any combination thereof. The memory 802 is used for various purposes by the controller 800, one of them being for storing data and program instructions for various software in the mobile terminal. The software includes a real-time operating system 820, man-machine interface (MMI) drivers 834, an application handler 832 as well as various applications. The applications include a phonebook application 840, an SMS application 850 and, optionally, an image pixel editor 860 and a WAP application 870, as well as various other applications which are not central to the invention. The MMI drivers 834 cooperate with conventional MMI or input/output (I/O) devices, including a display 836 and a keyboard 838 as well as various other I/O devices such as a microphone, a speaker, a vibrator, a joystick, a ringtone generator, an LED indicator, etc. As is commonly known, a user may operate the mobile terminal through the man-machine interface thus formed.

The software also includes various modules, protocol stacks, drivers, etc., which are commonly designated as 830 and which provide communication services (such as transport, network and connectivity) for an RF interface 806, and optionally a Bluetooth interface 808 and an IrDA interface 810. The RF interface 806 comprises an internal or external antenna as well as appropriate radio circuitry for establishing and maintaining a wireless link to a base station (e.g. the link 102 and base station 104 in FIG 1). As is well known to a man skilled in the art, the radio circuitry comprises a series of analogue and digital electronic components, together forming a radio receiver and transmitter. These components include, i.a., band pass filters, amplifiers, mixers, local oscillators, low pass filters, AD/DA converters, etc.

The mobile terminal also has a SIM card 804 and an associated reader. As is commonly known, the SIM card 804 comprises a processor as well as local work and data memory.

The phonebook application 840 handles a plurality of phonebook entries or records 842, which are stored in the memory 802. In the embodiment of FIG 8, each phonebook entry 842 has a Name field, a Mobile phone No field 844, a Home phone No field, a Work phone No field, a Fax No field, an Email address field, a Caller group data (CLI group) field, a VAD (Voice-Activated Dialling) data field, as well as an Icon data field 846. The VAD data field is for storing a binary audio file that contains a spoken name or other label for the particular phonebook entry 842 or particular phone number field within that entry. In a manner well known per se, a user may establish an outgoing call to a particular phone number by simply pronouncing the desired name of the callee. If the pronunciation sufficiently matches the audio contents of the VAD data field, the mobile terminal will initiate the call to the callee. Of course, the normal or traditional way of using the phonebook application 840 for the user is to select a desired phonebook entry 842, or phone number field within such an entry, through the keyboard 838 and display 836.

The SMS application 850 handles a plurality of SMS messages, both unread messages 852 and the ones, 854, that have already been read/opened. Messages 852 and 854 may be stored in memory 802 of the mobile terminal, in the internal memory of the SIM card 804, or in both. Stored SMS messages may also be transferred between one of these memories and the other. FIG 8 illustrates the composition of a typical SMS message 852 upon receipt in the mobile terminal. The SMS message 852 has a control data portion 856 and a message data portion 858. The control data portion 856 occupies 120 octets. The message data portion 858 occupies 140 octets and contains the payload of the SMS message, i.e. the actual message data 859. Of course, the entire message data portion 858 need not always be filled with valid data; in case the sender of the message has written only a short message, some part of the message data portion 858 may contain garbage data. Alternatively, the message data portion 858 may be terminated after the last valid octet by a predetermined control character, or the length of the message data portion 858 may be indicated as a header parameter in the control data portion 856.

The control data portion 856 contains various protocol layer-specific and message type-specific control data, including a specification of the phone number 857 of the sender. For details about the format of SMS messages, reference is made to available standards for 2G, 2.5G and 3G mobile telecommunications systems. For instance, the SMS service for 3G systems is decribed in detail in "3GPP TS 24.011", which is available at http://www.3gpp.org/.

Referring back to the phonebook application 840, except for the Icon data field 846, the fields of a phonebook entry 842 essentially correspond to those of a contemporary mobile terminal. The Icon data field 846, on the other hand, is part of the new functionality provided by the invention. The purpose of the Icon data field 846 is to provide an association between a particular phonebook entry 842 and a particular received message icon 316, 416, 516, 616-617, 716-717 to be presented on the display 300/836. Thus, the Icon data field 846 either contains or points at icon image data that defines the icon which is associated with the phone number 857 of the sender of the received message 852 to be announced on the display.

In one embodiment, the icon is stored as a bitmap of image data directly in the Icon data field 846. The bitmap may have a 1-bit depth (black and white icon) or an n-bit depth (for defining an icon having n possible grayscale or color values). In another embodiment, the image data is stored in a compressed format in the Icon data field 846. In this embodiment, an existing image compression format may be used such as JPEG or GIF. In still another embodiment the Icon data field 846 stores a link to an icon image file which itself is stored outside of the phonebook entries 842 elsewhere in memory 802. The link may be a file identifier supported by the real-time operating system 820.

Phonebook entries may be mapped to available icons in different ways. For instance, in one embodiment the mobile terminal is delivered and sold with a set of prefabricated icons, among which the user may select a particular icon to associate with a particular phonebook entry 842. This selecting and associating operation is preferably performed through a menu option in the phonebook application 840. Such prefabricated icons may illustrate different face looks, signs, symbols, etc., generally like the different software application icons available in a graphical computer user interface such as the Microsoft^{®} Windows family.

In one embodiment the image pixel editor 860 may be used for modifying existing icons and/or creating and designing new icons. Such modified or new icons are then stored in the same manner as has been described above, and in the case of a new icon, the user may associate the icon with a desired phonebook entry 842 in the way described above.

In another embodiment a new icon may be downloaded to the mobile terminal by a data connection over the RF interface 806, Bluetooth interface 808 or IrDA interface 810, or through a WAP session in the WAP application 870, or embedded in an SMS, email or business card (Vcard) message.

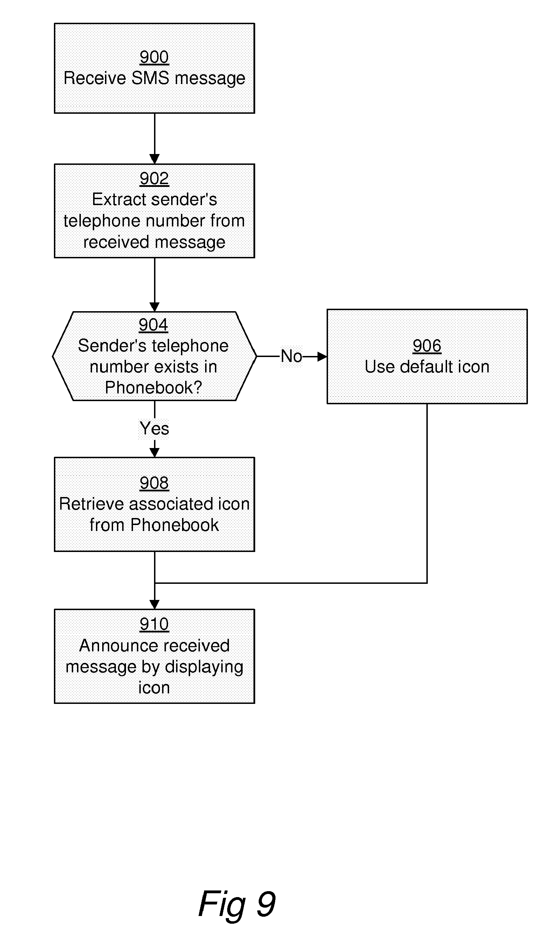

The procedure for receiving a new SMS message 852 and announcing the arrival thereof on the display 300/836 will now be described with reference to FIG 9. In a first step 900, a new SMS message is received by the RF interface 806 and is forwarded by the real-time operating system 820 and application handler 832 to the SMS application 850. The SMS application 850 stores the new message 852 in either the memory 802 or the SIM card 804.

Then, in a step 902 the SMS application 850 processes the control data portion 858 of the new message 852. In more particular, it extracts the sender's telephone number 857 and then, in a step 904, inquires the phonebook application 840 whether the extracted telephone number exists in the phonebook. The phonebook application 840 searches all of the phonebook entries 842 and responds, in case of a match, to the SMS application 850 with the matching icon. The exact format of the response will depend on the way in which the icon is represented in the Icon data field 846 (see previous section for details). Thus, the response from the phonebook application 840 may contain the actual icon image data, or a link or identifier to a separate image file, as the case may be.

If no matching icon is found in the phonebook - either because the sender's telephone number 857 does not exist in the phonebook, or because there is no icon defined in the Icon data field 846 of the phonebook entry in question, the execution proceeds to step 906 so as to use a default icon, or alternatively no icon at all. On the other hand, if an associated icon is successfully retreived from the phonebook application 840 in a following step 908, the MMI 834 is requested by the SMS application 850 in a step 910 to announce the received message 852 by displaying the retrieved icon together with an informative text, for instance as suggested by any of the examples shown in FIGs 3-7.

A way in which a user may order download of an icon from a server to a mobile terminal will now be described with reference to FIG 10. First, in a step 1000, a user connects to an icon ordering service, such as the web server 122 of FIG 1, through e.g. the web client 126. Alternatively, however, the icon ordering service may be of another type, such as a telecall service where the user places his or her order through the keypad of a mobile terminal 100, 106 or a stationary telephone 132. In a next step 1002, the user scans through a plurality of icons that are offered for download by the web server 122 and are shown in a web interface on the display of the web client 126. After having selected one icon of interest, for instance by a normal selecting operation such as a mouse click or a key press, the web server 122 checks in step 1004 whether the identity of the user is known. The check in step 1004 may for instance be performed by any appropriate login procedure, or by the use of cookie files, or a combination of these. Alternatively, login may actually take place already in step 1000, whereby the check in step 1004 may merely consist in verifying that successful login was previously performed. If login is performed in step 1000, the check in step 1004 may even be dispensed with, particularly if the user is given access to the ordering functionality only upon successful login. Other ways of determining the identity of the user are of course also possible.

If it is found in step 1004 that the identity of the user is not known, the user is asked in step 1006 to specify, in step 1008, a phone number which the ordered icon is to be delivered to. Here, it is possible to perform some sort of simple authentication measures. For instance, the user may be required to enter the name, address, etc., or parts thereof, of the person that holds the subscription for the specified phone number, whereby the web server 122 may contact an automatic subscription verification service provided by e.g. the operator of the subscription to check the correctness of the information specified by the user.

If on the other hand it is determined in step 1004 that the identity of the user is known, the web server 122 inquires a database, etc., to fetch in step 1010 a prestored mobile phone number which is associated with the user. Then, in step 1012, the web server 122 generates an outgoing SMS message, which in its control data portion may have message type-specific data with an indication that the SMS is of a type that will carry settings data rather than pure message text. The way in which settings data is indicated and carried may be done in essentially the same way as for instance WAP settings are indicated and carried in contemporary 2G/2.5G mobile telecommunications systems. Icon data for the selected icon may be put in the message data portion of the generated outgoing SMS message. As mentioned in conjunction with FIG 8, the message data portion of an SMS message may contain 140 octets and thus allow for transport of an icon image with a size up to 140x8 = 1112 bits. Such a size is sufficient for a small icon, even in color or grayscale.

As an alternative to the above, one or a few of the initial octets of the message data portion may contain a predetermined code to inform the receiving mobile terminal that the rest of the message data portion contains icon image data rather than pure text data.

If the icon data requires larger space than what is available in one SMS message, multiple SMS messages can be used to carry the icon data. In such a case, the icon data will be split up between the SMS messages and later reassembled in the same way as is commonly done when sending longer text messages.

The control data portion of the generated outgoing SMS message will also contain the telephone number of the user that selected the icon in step 1002 (cf 857 in FIG 8). When the generation of the outgoing SMS message is completed, it is transmitted by the web server 122 to the mobile telecommunications network. This may be done directly through appropriate SMS transceiver hardware connected to the web server 122, or by using a SMS transmittal service which is provided by an operator of the mobile telecommunications network 110 and is accessible from the Internet 120.

Finally, in step 1014, the web server 122 may send billing information to the user's operator.

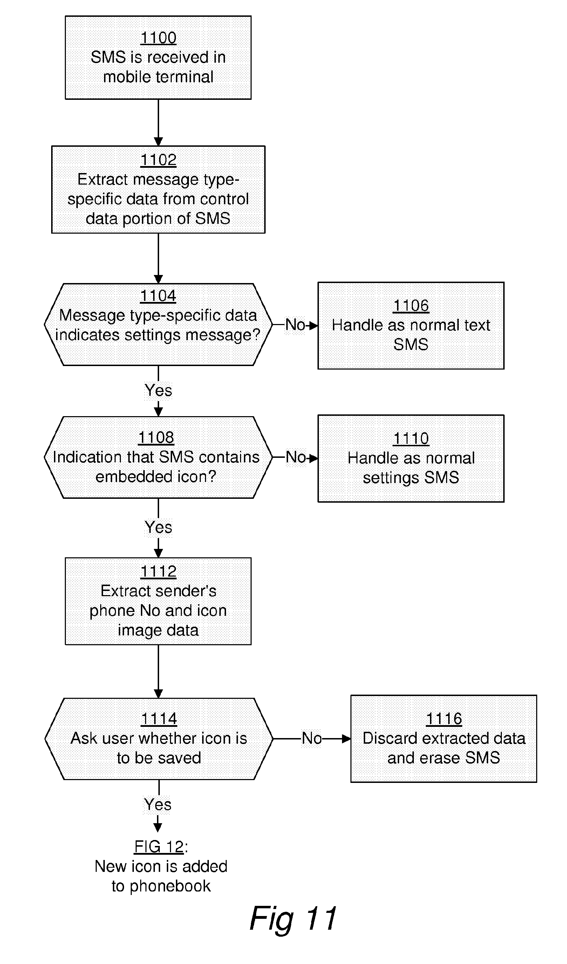

An alternative to the procedure shown in FIG 10 is to allow a user to send an order message, such as an SMS, MMS or email message, to an icon ordering server. In this message the user may specify an icon code that designates a particular one of the available icons in the server. The server may then put the ordered icon in a reply message, as in step 1012, and send the message to the user, which will proceed with the receipt thereof as described in FIG 11. Alternatively, in the order message the user may specify a phone number to deliver the designated icon to, much like in steps 1006-1008. Billing may take place as in step 1014.

In the procedure described above the icon selected by the user was sent to the user's own phone number. It is however contemplated that the user may alternatively specify another phone number, typically that of a friend, to send the selected icon to as a gift, etc. This alternative may require that the user has properly logged in to the web server so as to allow for billing of the user and not the subscriber of said another phone number.

FIG 11 is a flow chart which illustrates how an icon that has been ordered from a server according to FIG 10 may be received and installed in a mobile terminal. In a first step 1100 an SMS message is received by the RF interface 806 and is forwarded to the SMS application 850. In step 1102, the SMS application 850 extracts message type-specific data from the control data portion of the received SMS message, and in step 1104 a check is made to see whether the message type-specific data indicates that the SMS message is a settings message. If not, the received SMS message is handled by the SMS application 850 in step 1106 as any normal pure text SMS, i.e. according to the steps of FIG 9. On the other hand, if the SMS message is in fact a settings message, a new check is made in step 1108 for an indication that the SMS message contains an embedded icon. If no icon is embedded, the received SMS message is treated as any normal settings message in step 1110.

In step 1112, if an icon was found in step 1108, the SMS application 850 extracts the sender's phone number (cf 857 in FIG 8) as well as the icon image data from the received SMS message. Moreover, a text on the display of the mobile terminal will be shown in step 1114 to inform the user that a new icon has arrived and ask whether the user wants to store this icon. If the user chooses not to store the icon, the extracted data is discarded and the SMS message is erased in step 1116. Otherwise, the SMS application 850 hands over the extracted phone number and icon image data to the phonebook application 840. This may for instance be done by a function call, through the real-time operating system 820 and/or application handler 832.

In step 1200, the phonebook application 840 first checks to see whether the extracted sender's phone number from step 1112 is identical to the number of the mobile terminal. This will be the case if the user that ordered the icon from the web server 122 chose to send the icon to his or her own mobile terminal. If so, the user may specify an existing phonebook entry, or create a new one, and store the icon in this entry, as seen in step 1202.

If the sender's phone number is not identical to the number of the mobile terminal, the phonebook application 840 checks the stored phonebook entries 842 in steps 1204 and 1206 to see whether the sender's phone number matches any of the phonebook entries. If no match is found, the user is prompted in step 1208 to specify a name tag for the sender. Then, in step 1210, the phonebook application 840 creates a new phonebook entry, having the specified name tag and including the sender's phone number.

If a match was found in steps 1204 and 1206, the phonebook application 840 checks the found entry in step 1212 to see whether that phonebook entry already has an icon. If so, the user is asked to confirm overwrite of the existing icon with the new one in step 1214.

Finally, the icon is saved or defined in the Icon data field 846 of the phonebook entry found in steps 1204 and 1206 or created in step 1210.

Even if the icon ordering and delivering functionality has been illustrated in FIGs 10-12 by way of a web server and SMS messages, other alternatives are possible. For instance, the ordered icon may be delivered through other bearer services than SMS, including but not limited to MMS, WAP, GPRS, Bluetooth, IrDA, email or Vcard, as is readily realized by a man skilled in the art. For bearer services that do not normally include the sender's telephone number in the communication, for instance Bluetooth or IrDA, the sender's telephone number may be included in the payload or message data field together with the icon data.

The embodiments that have been described this far primarily relate to SMS messages and mobile terminals. However, the concepts of the invention may be applied in other areas as well. For instance, receipt of other types of electronic messages such as MMS or email messages may be announced in a corresponding manner by a personal icon which is associated with a particular sender. More and more hand-held communication apparatuses (such as portable digital assistants, communicators, palmtop computers and laptop computers) are becoming capable of sending and receiving emails. Contemporary email handling software suffers from the same problem, namely that the user is only notified that an email has arrived either by a notification or through a small envelope icon on the toolbar. To find out who the email is from, the user has to actually enter the email handling application and check the email. If emails are arriving frequently, the user's concentration may be disturbed. By applying the functionality of the invention, the user may directly - without having to enter the email handling application - determine whether, for instance, a received message is from a sender who the user is expecting an important message from. Moreover, this may be done without revealing the identity of the sender to anyone but the user, who happens to be watching the screen as the message arrives.

The received message icons could be displayed in a special box appearing in a corner or at some other discrete location on the screen, perhaps in a toolbar, or by just replacing the contemporary envelope icon with the icon for the sender of the last unread message, much like in FIG 5. If more than one message is received and still unread, one way of announcing this would be to show the icons next to each other in the icon part of the toolbar.

Multiple messages from the same sender may be indicated in the manner suggested above for the SMS embodiments. If there are multiple messages from senders without specified icons, these messages may be represented by an envelope icon having the number of messages it represents written on it or next to it.

The above may also be applied to stationary computers as well as their operating systems.

All message icons 316, 416, 516, 616-617, 716-717 in the embodiments set forth above relate to received but still unread messages. It is however envisaged that other embodiments of the invention may use the message icon concept also for already read messages.

The invention has mainly been described above with reference to a few embodiments. However, as is readily appreciated by a person skilled in the art, other embodiments than the ones disclosed above are equally possible within the scope of the invention, as defined by the appended patent claims.

Here now follows a set of numbered clauses related to embodiments of the present invention.
1. A communication apparatus comprising:
   a controller (800);
   an interface (806; 850) adapted to receive an electronic message (852);
   a display (300; 836); and
   a memory (802; 804), said memory being adapted to store image data representing at least one predefined icon to be presented on said display so as to indicate receipt of said electronic message, **characterized** in that
   said memory (802, 804) is adapted to store an association (844, 846) between the or each predefined icon (846) and a sender (844) of electronic messages; and in that
   said controller (800) is adapted to determine a sender (857) of said received electronic message (852), to match the sender thus determined with the or each predefined icon by way of said association, and to present a matching icon, if any, on said display (300) to indicate receipt of said received electronic message as well as the sender thereof.
2. An apparatus as in clause 1, wherein said electronic message (852) is of a type having a control data portion (856) and a message data portion (858), the control data portion including a message sender identity (857), wherein said controller (800) is adapted to determine the sender of said received electronic message from the message sender identity.
3. An apparatus as in clause 2, wherein said electronic message is an SMS or MMS message.
4. An apparatus as in clause 2 or 3, wherein said message sender identity is a telephone number for a mobile telecommunications system such as GSM, UMTS, D-AMPS or CDMA2000.
5. An apparatus as in clause 2, wherein said electronic message is an email message.
6. An apparatus as in any one of clause 1-5, wherein said controller (800) is adapted to simultaneously present a plurality of matching icons (616-617; 716-717) on said display (300) to indicate a corresponding plurality of received messages.
7. An apparatus as in any one of clause 1-5, wherein said controller (800) is adapted to display, for each presented matching icon, a numeric indicator to indicate the current number of unread messages received from a respective sender associated with each presented matching icon.
8. An apparatus as in any one of clause 1-7, wherein said controller (800) is adapted to enhance the presentation of the or each presented icon with a visual effect such as animation, scrolling, morphing, flashing or changing colors.
9. An apparatus as in any one of clause 1-8, further comprising at least one of a phonebook (840), address book or contact book, wherein the association between the or each predefined icon and a sender of electronic messages is stored in an entry (842) in said phonebook, address book or contact book.
10. An apparatus as in clause 9, wherein the association comprises a link to an image file, which is stored outside of said phonebook entry (842), address book entry or contact book entry but inside said memory (802, 804), and which contains image data that defines the or each predefined icon.
11. An apparatus as in clause 9, wherein the association comprises image data that defines the or each predefined icon and is stored in said phonebook entry (842), address book entry or contact book entry.
12. An apparatus as in any one of clause 9-11, wherein the association further comprises a message sender identity (844) as defined in clause 2.
13. An apparatus as in any one of clause 1-12, further comprising means for adding a new icon to said memory (802, 804), and means for generating in said memory a new association between said new icon and a sender of electronic messages.
14. An apparatus as in clause 13, wherein said means for adding a new icon comprises an image editor (860) in said apparatus.
15. An apparatus as in clause 13 or 14, wherein said means for adding a new icon comprises a communications interface of said communication apparatus.
16. An apparatus as in clause 15, wherein said communications interface is at least one of:
   a serial interface (810) such as IrDA, USB or RS232;
   a short-range supplementary radio data interface (808) such as Bluetooth;
   a WAP compatible interface (870); and
   an RF interface (806) for a mobile telecommunications system such as GSM, UMTS, D-AMPS or CDMA2000.
17. An apparatus as in clause 15, wherein said communications interface is the same as said interface (806; 850) adapted to receive an electronic message.
18. An apparatus as in any one of clause 1-17, wherein said communication apparatus is a portable telecommunication apparatus, such as a mobile terminal for GSM, UMTS, D-AMPS or CDMA2000.
19. A method of indicating receipt of an electronic message in a communication apparatus (100) having a display (300, 836) and a memory (802, 804), wherein at least one predefined icon (316, 846) is provided in said memory, a received electronic message (852) is matched with the or each predefined icon, and a matching icon (316), if any, is presented on said display (300) to indicate said received electronic message, **characterized** by the steps of
   providing, in said memory (802, 804), an association (844, 846) between the or each predefined icon (846) and a sender (844) of electronic messages;
   determining a sender (857) of said received electronic message (852); and
   determining the matching icon, if any, through the sender thus determined and said association in said memory.
20. A method as in clause 19, wherein said electronic message (852) is of a type having a control data portion (856) and a message data portion (858), the control data portion including a message sender identity (857), wherein the sender of said received electronic message is determined from the message sender identity.
21. A method as in clause 20, wherein said electronic message is an SMS or MMS message.
22. A method as in clause 20 or 21, wherein said message sender identity is a telephone number for a mobile telecommunications system such as GSM, UMTS, D-AMPS or CDMA2000.
23. A method as in clause 20, wherein said electronic message is an email message.
24. A method as in any one of clause 19-23, performed repeatedly for a plurality of received messages, so that a corresponding plurality of matching icons (616-617; 716-717), if any, are presented simultaneously on the display (300).
25. A method as in any one of clause 19-23, performed repeatedly for a plurality of received messages so that only the last received message, irrespective of sender, is indicated by its matching icon, if any, on the display.
26. A method as in any one of clause 19-23, performed repeatedly for a plurality of received messages so that each presented matching icon, if any, is provided with a numeric indicator to indicate the current number of unread messages received from the sender associated with the presented matching icon.
27. A method as in any one of clause 19-26, wherein the presentation of the or each presented icon is enhanced with a visual effect such as animation, scrolling, morphing, flashing or changing colors.
28. A method as in any one of clause 19-27, wherein a default icon is presented on said display (300) to indicate said received electronic message, in case no matching icon has been determined.
29. A method as in any one of clause 19-28, wherein the association between the or each predefined icon and a sender of electronic messages is stored in a phonebook entry (842), address book entry or contact book entry in said memory (802, 804).
30. A method as in clause 29, wherein the association comprises a link to an image file, which is stored outside of said phonebook entry (842), address book entry or contact book entry but inside said memory (802, 804), and which contains image data that defines the or each predefined icon.
31. A method as in clause 29, wherein the association comprises image data that defines the or each predefined icon and is stored in said phonebook entry (842), address book entry or contact book entry.
32. A method as in any one of clause 29-31, wherein the association further comprises a message sender identity (844) as defined in clause 20.
33. A method as in any one of clause 19-32, comprising the additional steps of adding a new icon to said memory (802, 804), and generating in said memory a new association between said new icon and a sender of electronic messages.
34. A method as in clause 33, wherein said step of adding is preceded by a step of generating said new icon locally by way of an image editor in said communication apparatus.
35. A method as in clause 34, wherein said step of adding is preceded by a step of receiving said new icon through a communications interface of said communication apparatus.
36. A method as in clause 35, wherein said communications interface is at least one of:
   a serial interface such as IrDA, USB or RS232;
   a short-range supplementary radio data interface such as Bluetooth;
   a WAP compatible interface; and
   an RF interface for a mobile telecommunications system such as GSM, UMTS, D-AMPS or CDMA2000.
37. A method as in clause 36, wherein said communications interface is the same as the one through which said electronic message is received.
38. A method as in any one of clause 19-37, wherein said communication apparatus is a portable telecommunication apparatus, such as a mobile terminal for GSM, UMTS, D-AMPS or CDMA2000.
39. A method for remote distribution of icon data for indicating receipt of electronic messages to a communication apparatus (100), **characterized** by the steps of
   providing a computerized icon ordering service;
   accepting (1002) a user's selection of one icon among a plurality of available icons;
   forming (1012) an icon data set that defines said selected icon;
   delivering (1012) said icon data set electronically to said communication apparatus (100),
   wherein said steps of forming and delivering said icon data set are performed in a manner such that said icon data set may be stored upon receipt (1100) in said communication apparatus and be associated (1202; 1216) with a sender of electronic messages.
40. A method as in clause 39, wherein said step of providing a computerized icon ordering service is provided from a server (122) connected to a wide area network (120) and said step of accepting (1002) a user's selection of one icon is performed through a user interface (126) which is provided by said server and is accessible over said wide area network.
41. A method as in clause 39, wherein said step of providing a computerized icon ordering service is provided from a server connected to a telecommunications network (110; 130) and said step of accepting a user's selection of one icon is performed by accepting commands which are entered by the user on a telephone apparatus (100, 106; 132) and are transmitted over said telecommunications network.
42. A method as in any one of clause 39-41, wherein, during said steps of forming and delivering (1012) said icon data set, a sender identity is included in or attached to said icon data set so as to allow association of said icon data set with a sender of electronic messages that is represented by said sender identity.
43. A method as in clause 42, wherein said sender identity is a telephone number for a mobile telecommunications system such as GSM, UMTS, D-AMPS or CDMA2000.
44. A method as in any one of clause 39-43, wherein said step of delivering (1012) said icon data set is performed by including said icon data set in an SMS, MMS or email message.
45. A method as in any one of clause 39-44, wherein said communication apparatus is a portable telecommunication apparatus, such as a mobile terminal for GSM, UMTS, D-AMPS or CDMA2000.
46. A server for providing a computerized icon ordering service, **characterized** by
   a memory for a plurality of available icons;
   a controller, said controller being adapted to perform the method according to any one of clauses 39-45.
47. A computer program product directly loadable into a memory of a processor, the computer program product comprising program code for performing the method according to any one of clauses 39-45.

## Claims

1. A method for remote distribution of icon data for indicating receipt of electronic messages to a communication apparatus (100), **characterized by** the steps of
providing a computerized icon ordering service;
accepting (1002) a user's selection of one icon among a plurality of available icons;
forming (1012) an icon data set that defines said selected icon;
delivering (1012) said icon data set electronically to said communication apparatus (100),
wherein said steps of forming and delivering said icon data set are performed in a manner such that said icon data set may be stored upon receipt (1100) in said communication apparatus and be associated (1202; 1216) with a sender of electronic messages.

2. A method as in claim 1, wherein said step of providing a computerized icon ordering service is provided from a server (122) connected to a wide area network (120) and said step of accepting (1002) a user's selection of one icon is performed through a user interface (126) which is provided by said server and is accessible over said wide area network.

3. A method as in claim 1, wherein said step of providing a computerized icon ordering service is provided from a server connected to a telecommunications network (110; 130) and said step of accepting a user's selection of one icon is performed by accepting commands which are entered by the user on a telephone apparatus (100, 106; 132) and are transmitted over said telecommunications network.

4. A method as in any one of claim 1-3, wherein, during said steps of forming and delivering (1012) said icon data set, a sender identity is included in or attached to said icon data set so as to allow association of said icon data set with a sender of electronic messages that is represented by said sender identity.

5. A method as in claim 4, wherein said sender identity is a telephone number for a mobile telecommunications system such as GSM, UMTS, D-AMPS or CDMA2000.

6. A method as in any one of claim 1-5, wherein said step of delivering (1012) said icon data set is performed by including said icon data set in an SMS, MMS or email message.

7. A method as in any one of claim 1-6, wherein said communication apparatus is a portable telecommunication apparatus, such as a mobile terminal for GSM, UMTS, D-AMPS or CDMA2000.

8. A server for providing a computerized icon ordering service, **characterized by**
a memory for a plurality of available icons;
a controller, said controller being adapted to perform the method according to any one of claims 1-7.

9. A computer program product directly loadable into a memory of a processor, the computer program product comprising program code for performing the method according to any one of claims 1-7.
